# EUROPEAN PATENT APPLICATION

(11) **EP 2 662 816 A1**
(43) Date of publication of application: **13.11.2013**
(21) Application number: 12167437.8
(22) Date of filing: 10.05.2012
(51) Int. Cl.: G06Q 10/10

(54) **Self-organizing data mesh**

(71) Applicant: Real Enterprise Solutions Development B.V., 5215 MV 's-Hertogenbosch (NL)
(72) Inventor: Janssen, Bob, 4926 RB Lage Zwaluwe (NL); Jansen, Peter Gerardus, 4902 DD Oosterhout (NL)
(74) Representative: De Vries & Metman

(57) **Abstract**

A network comprising plurality of nodes is proposed. Each node in the network is configured to initiate synchronization with a first node in a data path to a sync pair node, for each sync pair node, once the node detects a change of data stored in a cache for a particular user. In this manner, a chain reaction of synchronizations can propagate through the network, in a self-organizing manner, until all sync pair nodes are synchronized.

## Description

### FIELD OF THE INVENTION

The present invention relates to synchronization of data stored on different computing devices.

### BACKGROUND

With the ever-increasing globalization and mobility, it is easy to imagine that a user of a portable computer would use his computer in different locations around the world. The computer could store files containing documents and settings which need to be synchronized with other computers and stored on a server for backup. Two classes of solutions are currently used for providing synchronization and/or backup for the different computers.

One class of solutions relies on a global server that stores all documents and settings. Such an implementation is typical e.g. for document management systems that use a database. Some challenges with this implementation include poor performance retrieving and storing data, single point of failure when only one server is used, and high costs for replicating data to other servers.

Another class of solutions uses regional file servers that store multiple instances of all documents and settings. Such an implementation is typical e.g. for file sharing applications using file servers. One problem with this implementation includes unpredictability in what documents and settings are synchronized with a new portable computer due to the fact that not all file servers have the latest data. Another problem includes difficulties and high costs in replicating data to other regional file servers due to the locations of these file servers being dispersed throughout the world.

### SUMMARY OF THE INVENTION

It is an object of the invention to provide a method and a system for data synchronization in a manner that improves on at least some of the drawbacks of the current solutions described above.

In one aspect of the invention, a method for a first node of a plurality of nodes to assist data synchronization between at least some of the plurality of nodes is provided. The method, carried out by the first node, includes detecting a change in data stored in a cache of the first node for a particular user. In response to detecting the change, the method further includes the steps of identifying at least one further node of the plurality of nodes that stores a corresponding cache comprising data for that user and requires synchronization between the data stored in the cache of the first node and the data stored in the corresponding cache of the further node, identifying a next node to be synchronized with as a first node in a data path from the first node to the further node, where the data path may comprise intermediate nodes, and synchronizing the data stored in the cache of the first node with data stored in a corresponding cache of the next node to be synchronized with.

As used herein, the term "user" refers to the user of a client device, which user may or may not be a human user (the latter being applicable e.g. for machine-to-machine communications). As also used herein, the term "client device" refers to any end user device or computing system within a network. The client device could include, but is not limited to, e.g. a computer, a hand-held internet browser, an email device, a mobile phone, a game console, or a hand-held gaming device.

Further, the term "data" refers to any data relevant for a particular user such as e.g. documents and settings of the user.

As also used herein, the expression "synchronization between A and B" and variations thereof is used to refer to synchronization of data between A and B in a conventional sense, which includes at least partial merging of data stored in A with data stored in B by e.g. copying files in both directions, with the purpose of keeping the two locations identical to one another.

As used in the claims, the expression "detecting a change in data stored in a cache" is used to cover not only detection of change in data in an already existing cache, but also detection of creation of a new cache (which could be empty or could include some data copied into it). The term "further node" is defined in the claims as a node of the plurality of nodes that stores a corresponding cache comprising data for a particular user and requires synchronization between the data stored in the cache of the first node and the data stored in the corresponding cache of the further node. Such a further node is referred to in the present description as a "sync pair node," indicating that that node must be synchronized with whenever there is a change in data stored in a cache for the particular user elsewhere in the network of nodes. As is clear from the language "at least one further node," there may be more than one sync pair node, i.e. there may be, and typically are, more than one further node that needs to be synchronized with the first node when there is a change in data stored in the corresponding cache of the first node. Further, the first node itself is also a "sync pair node" because it has been synchronized with, either by a preceding node or by the client device of the user.

Typically, the further node to be synchronized with is a node to which one or more client devices of a particular user have connected to in the past. Therefore, such a further node typically would already have a cache storing data for that particular user, as recited in claim 1. However, in an alternative embodiment, such a further node to be synchronized with does not have to already store such a cache. Such a node may still require synchronization, during which data from the cache of the first node is copied into a newly created corresponding cache of that further node.

Finally, as used herein, the term "data path" between two nodes refers to one or more data connections which, together, form a path or a connection over which exchange of data between the two nodes is possible, where the term "data connection" between two nodes refers to a direct connection between the two nodes over which exchange of data between the two nodes is possible.

The present invention is based on the recognition that, if a network comprising plurality of nodes is configured so that each node initiates synchronization with a first node in a data path to a sync pair node once the node detected a change of data stored in a cache for a particular user, then a chain reaction of synchronizations can propagate through the network until all sync pair nodes are synchronized. As a result, the network of such nodes may be "self-organizing" in a sense that the nodes can initiate and carry out all the necessary synchronizations on their own. Once data in a cache for a particular user in one node is changed, that node initiates synchronization of data in that cache with the next node that the first node has a data connection with. Once that synchronization is done, the next node that was just synchronized, in turn, detects that there was a change in data stored in its' cache for that user and initiates synchronization of that cache with yet another node. In other words, each node is configured to implement a so-called "push mechanism" where, once some data was "pushed" onto a node by a client device, by another node, or by some other entity, the node "pushes" that data further onto subsequent nodes that need to be synchronized. In this manner, data for the particular user stored in caches in different sync pair nodes will eventually be synchronized so that each sync pair node stores data that is a result of merging of such data from all of the sync pair nodes.

According to other aspects of the invention a device (a node), and a network comprising a plurality of such devices are proposed. The devices, which could be implemented in hardware, in software, or a combination of both, are adapted to carry out a method having one or more of the above mentioned features.

Still other aspects of the invention relate to a computer program and a, preferably non-transitory, computer-readable storage medium storing a computer program for performing the method having one or more of the above mentioned features. This advantageously enables at least some of the device functionality to be implemented in software.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 provides an exemplary illustration of a self-organizing network comprising multiple nodes, according to one embodiment of the present invention;
Fig.2A provides a flow diagram of method steps for synchronizing data from a client device with the node that the client device is connected to, according to one embodiment of the present invention;
Fig.2B provides a flow diagram of method steps for self-organization between the sync pair nodes that takes place after updated data has been provided to at least one of the nodes, according to one embodiment of the present invention;
Fig.3 provides an exemplary illustration of a client device connected to one of the sync pair nodes of the self-organizing network of Fig. 1, according to one embodiment of the present invention;
Fig.4A provides an exemplary illustration of CDB entries for the client device of Fig. 3 after the CDB has been updated, in step 208 of Fig. 2B carried out in the first round of synchronization, to reflect synchronization of the client device with node X in step 206 of Fig. 2A, according to one embodiment of the present invention;
Fig.4B provides an exemplary illustration of CDB entries provided to node X in response to the request provided to the CDB in step 209 of Fig. 2B carried out in the first round of synchronization, according to one embodiment of the present invention;
Fig.4C provides an exemplary illustration of data paths from node X to sync pair nodes that need synchronization that allow identification of the next node to be synchronized in step 212 of Fig. 2B carried out in the first round of synchronization, according to one embodiment of the present invention;
Fig.5A provides an exemplary illustration of CDB entries for the client device of Fig. 3 after the CDB has been updated, in step 208 of Fig. 2B carried out in the second round of synchronization, to reflect synchronization of node X with node X+1 in step 213 of the first round of synchronization, according to one embodiment of the present invention;
Fig.5B provides an exemplary illustration of CDB entries provided to node X in response to the request provided to the CDB in step 209 of Fig. 2B carried out in the second round of synchronization, according to one embodiment of the present invention;
Fig.5C provides an exemplary illustration of data paths from node X to sync pair nodes that need synchronization that allow identification of the next node to be synchronized in step 212 of Fig. 2B carried out in the second round of synchronization, according to one embodiment of the present invention;
Fig.6A provides an exemplary illustration of CDB entries for the client device of Fig. 3 after the CDB has been updated, in step 208 of Fig. 2B carried out in the third round of synchronization, to reflect synchronization of node X with node X+1 in step 213 of the second round of synchronization, according to one embodiment of the present invention;
Fig.6B provides an exemplary illustration of CDB entries provided to node X in response to the request provided to the CDB in step 209 of Fig. 2B carried out in the third round of synchronization, according to one embodiment of the present invention;
Fig.6C provides an exemplary illustration of data paths from node X to sync pair nodes that need synchronization that allow identification of the next node to be synchronized in step 212 of Fig. 2B carried out in the third round of synchronization, according to one embodiment of the present invention;
Fig.7 provides an exemplary illustration of CDB entries for the client device after the CDB has been updated to reflect synchronization of the client device with node X in step 208 of Fig. 2B carried out in the final round of synchronization, according to one embodiment of the present invention;
Fig.8A provides a flow diagram of method steps for synchronizing data from a node in the network of Fig.3 storing data for the user of the new client device with the node that the new client device is connected to, according to one embodiment of the present invention;
Fig.8B provides a flow diagram of method steps for synchronizing data from a client device with the node that the client device is connected to when neither the client device nor the user have previously been known to CDB, according to one embodiment of the present invention;
Fig.8C provides a flow diagram of method steps for synchronizing data from the new client device of Fig.3 with the node that the client device is connected to after data stored for the user has been provided to the new client device, according to one embodiment of the present invention;
Fig.9A provides an exemplary illustration of CDB entries for user 1 obtained in step 802 of Fig.8A, according to one embodiment of the present invention;
Fig.9B provides an exemplary illustration of data paths from node Y to node NN that allow identification of the next node to be synchronized in step 805 of Fig.8A carried out in the first round of synchronization, according to one embodiment of the present invention;
Fig.9C provides an exemplary illustration of CDB entries for user 1 after the CDB has been updated to reflect synchronization of node Y with node Y+1 in step 806 of Fig.8A carried out in the first round of synchronization, according to one embodiment of the present invention;
Fig.9D provides an exemplary illustration of CDB entries for user 1 after the CDB has been updated to reflect synchronization of node Y with node Y+1 in step 806 of Fig.8A carried out in the second round of synchronization, according to one embodiment of the present invention; and
Fig.9E provides an exemplary illustration of CDB entries for user 1 after the CDB has been updated to reflect synchronization of CD 1 with node NN in step 811 of Fig.8C, according to one embodiment of the present invention.

### DETAILED DESCRIPTION OF THE DRAWINGS

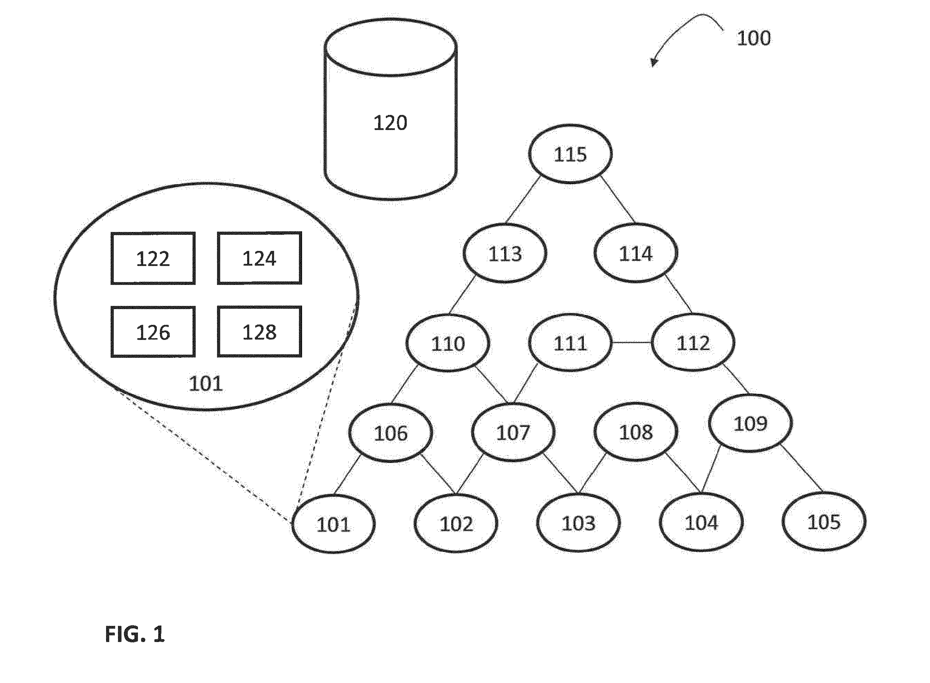

Fig.1 provides an exemplary illustration of a self-organizing network 100 comprising multiple nodes 101-115, according to one embodiment of the present invention.

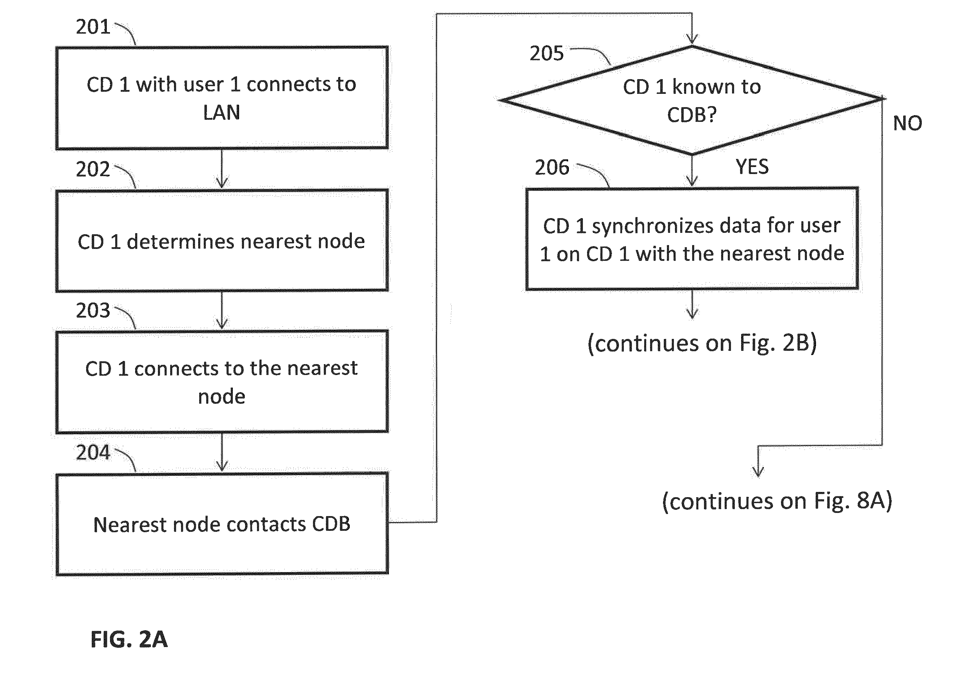

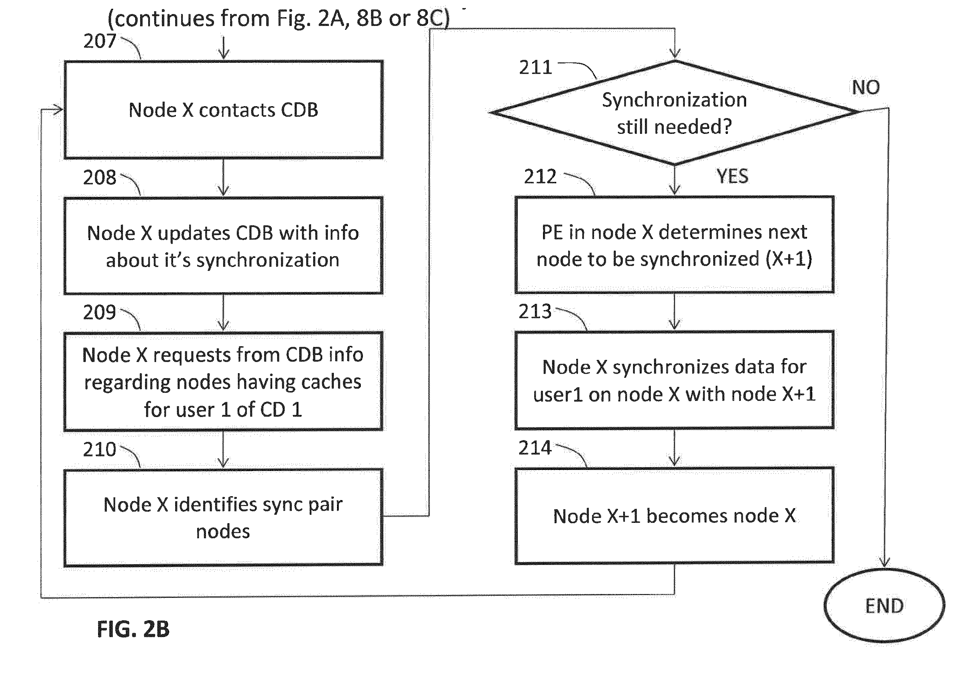

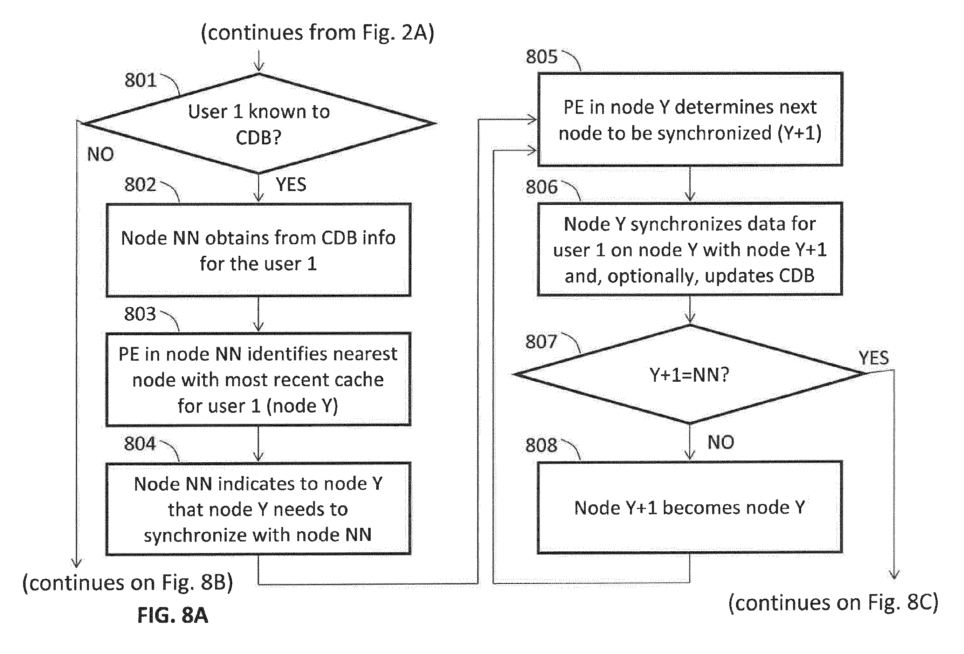

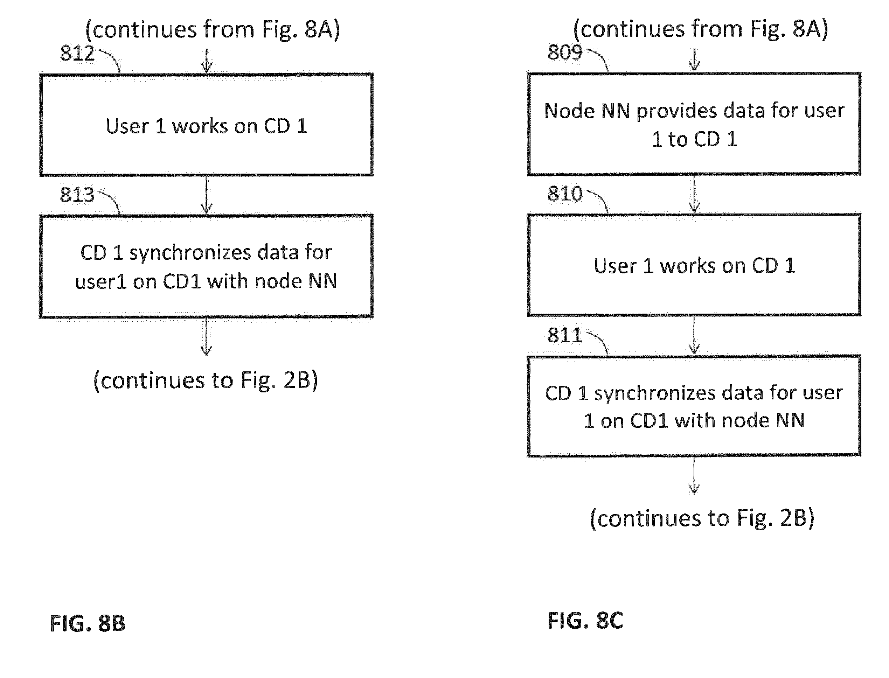

As shown with the inset in Fig. 1 for the node 101, each of the nodes 101-115 includes memory 122 for storing data. The data stored on the nodes 101-115 is organized in individual caches which are different for different users. In an optional embodiment, there may be a further level of granularity in that the data stored in the individual caches is distinguished not only on "per user" basis but also on "per client device" basis. In other words, the data stored on the nodes 101-115 may also be organized in caches that are different for different users of different client devices. Since such a further level of granularity requires more consideration than a more crude level of differentiating only between data for different users, but not between the different client devices of the users, methods steps of Figs. 2A, 2B, 8A, 8B, and 8C are first described in context of caches being distinguished on the per-user, per-client device basis.

### SCENARIO # 1: CACHES FOR PARTICULAR USERS OF PARTICULAR CLIENT DEVICES

As described in greater detail below, when there is any change to the data stored in one of the nodes 101-115 initiated by another device, such as e.g. by a client device connected to the node or by another node, the first node is configured to determine whether synchronization with further nodes is needed. If synchronization is determined to be necessary, the first node then initiates the synchronization with one or more selected nodes with which the first node has a data connection with. Once the selected next node has been synchronized, there is a change to the data stored in that node and, therefore, that node also determines whether further synchronization with other nodes is necessary and, if so, initiates further synchronization. The network 100 of such nodes 101-115 is, therefore, referred to as a "self-organizing network" or "self-organizing data mesh."

In order to implement embodiments described herein, each of the nodes 101-115 further include a path evaluator (PE) 124 for identifying, creating, and removing synchronization data paths and/or identifying the next node to be synchronized within each of the data path, and a replicator 126 for processing data paths, replicating changes through the network 100 to other nodes, and communicating with a central database (CDB) 120. Optionally, at least some of the nodes 101-115 could include a garbage collector 128 for cleaning up caches according to a set of predefined rules. In various embodiments, the functionality of the PE 124, the replicator 126, and the garbage collector 128 could be implemented in software, hardware, or a combination of both, and can be implemented in any lesser or greater number of individual modules.

The nodes 101-115 may e.g. be distributed in different locations throughout the world. The solid lines between some of the nodes 101-115 in Fig. 1 are used to represent data connections between the nodes. As previously described herein, the term "data connection" between two nodes refers to a direct connection between the two nodes over which exchange of data between the two nodes is possible. In turn, the term "data path" between two nodes refers to one or more data connections which, together, form a path or a connection over which exchange of data between the two nodes is possible. Of course, configurations of data connections between the nodes within a self-organizing network other than the exemplary configuration shown in Fig. 1 can be envisioned and are within the scope of the present invention.

In addition to exchanging data with one another, each of the nodes 101-115 is capable of exchanging data with the CDB 120 and client devices (not shown in Fig. 1). That data exchange could be carried out via a direct data connection or via one or more intermediate entities. For example, data exchange between at least some of the nodes 101-115 and the CDB 120 could be carried out via an intermediate proxy server storing a subset of entries stored in the CDB 120 which could be relevant for a particular node. Data exchange between at least some of the nodes 101-115 and a client device connected to them could be carried out e.g. via a router that the client device may be connected to.

The CDB 120 is a database that contains entries regarding the nodes and caches in the network 100. The entries are intended to contain information that enables each of the nodes 101-115 to determine whether and/or with which other nodes in the network 100 the node should synchronize its cache for a particular user of a particular client device. To that end, the entries of the CDB 120 could include information such as e.g. a client device for which a particular node has a cache, a particular user of the client device, a version of a cache in a particular node storing data for a particular user of a particular client device, the last time the cache has been accessed and/or updated, the last time the cache was synchronized, which nodes are sync pair nodes, etc.

Fig.2A provides a flow diagram of method steps for synchronizing data from a client device with the node that the client device is connected to, according to one embodiment of the present invention. Fig.2A may continue on Fig.2B, which provides a flow diagram of method steps for self-organization between the sync pair nodes that takes place after updated data has been provided to at least one of the nodes, according to one embodiment of the present invention.

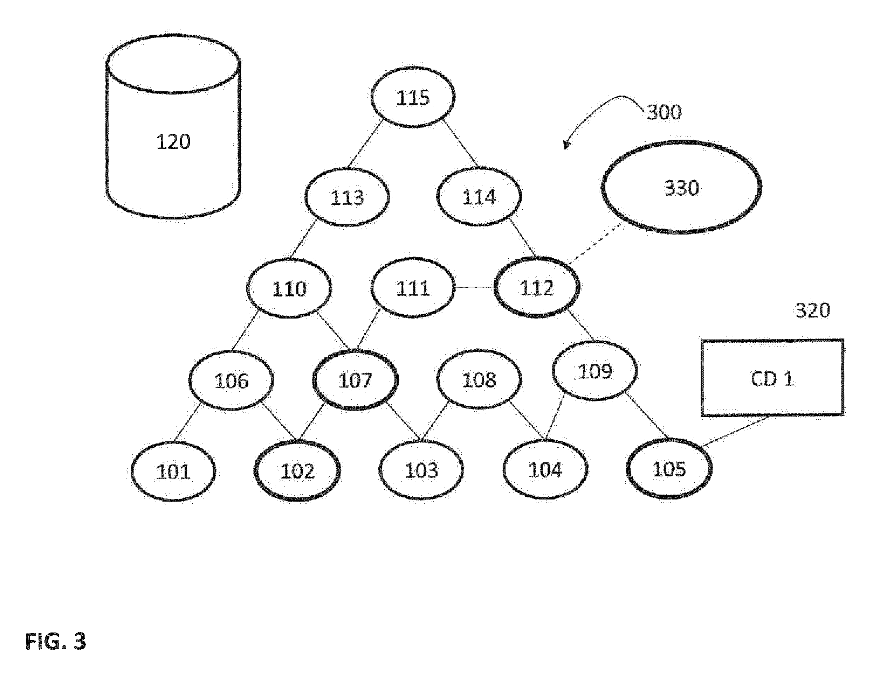

The method steps of Figs.2A and 2B are first described in conjunction with an exemplary architecture of a self-organizing network 300 illustrated in Fig. 3. However, while the method steps of Figs.2A and 2B may be described in conjunction with Fig.3, persons skilled in the art will recognize that any system configured to perform the method steps, in any order, is within the scope of the present invention.

The network 300 shown in Fig. 3 is a particular example of the network 100 shown in Fig. 1. Therefore, unless stated otherwise, all of the discussions provided herein with respect to the network 100 are applicable to the network 300 and, in the interests of brevity are not repeated.

The method of Fig. 2A begins with step 201 in which a particular user, referred to in Figs. 2A and 2B as "user 1," logs in to a particular client device, referred to in Figs. 2A and 2B as "CD 1" and shown in Fig. 3 as a device 320. CD 1 may already be connected or become connected to a particular network. In step 202, CD 1 is configured to determine which node of the network 300 can be considered to be the "nearest node" for the client device. In one embodiment, such determination could be made by CD 1 referring to a router or some other device within the network, which router contains information regarding the nearest node for that network. In other embodiments such determination could be made by e.g. sending a broadcast to discover nodes, by letting Dynamic Host Configuration Protocol (DHCP) provide a list of nodes, by using Domain Name System (DNS) to dynamically route to the nearest node or by pre-configuring a list of known nodes, in which case the nearest node could be determined by performing a tracert in a manner that would be known to a person skilled in the art.

As used herein, the term "nearest node" to a client device may be, but is not limited to, a node within the self-organizing network that is located geographically closest to the client device. In other embodiments, a node supporting the most optimal data exchange with the client device and/or a node most suitable for storing the data of the client device could be considered the nearest node. Other criteria as well as various combinations of the above-described exemplary criteria on deciding which node is the nearest node for a particular client device could be envisioned and are within the scope of the present invention.

Once CD 1 has obtained the information indicating which node of the network 300 is the nearest node, CD 1 can connect to the identified nearest node, in step 203 of Fig. 2A. This is illustrated in Fig. 3 with CD 1 connecting to the node 105, which, in this example, is the nearest node for CD 1.

The method then proceeds to step 204 where the nearest node contacts the CDB 120 to obtain information based on which a determination can be made as to whether CD 1 is known to the CDB 120. As used herein, the term "known" in the context of a particular client device being known to the CDB 120 refers to the CDB 120 containing some entries for that client device.

In step 205, based on the information obtained from the CDB 120 in response to step 204, the determination is made as to whether CD 1 is known to the CDB 120. In one embodiment, it is the nearest node (i.e, node 105 in this case) that can make that determination and provide its outcome to CD 1. In another embodiment, the CD 1 could make the determination itself, e.g. based on the information obtained by the nearest node in response to step 204 and provided to CD 1. In yet another embodiment, steps 204 and 205 may be combined in that the nearest node contacts the CDB 120 to obtain an answer from the CDB 120 as to whether or not CD 1 is known to the CDB 120 (i.e., it is the CDB 120 that makes the determination then).

If CD 1 is determined to be known to the CDB 120, the method proceeds to step 206. Otherwise the method continues with step 801 illustrated in Fig.8A, described below.

In step 206, CD 1 synchronizes its data for user 1 with the node that CD 1 is connected to. In the embodiment of Fig. 3, CD 1 then synchronized its data for user 1 with node 105. In various embodiments, this synchronization may be done periodically, at predetermined times, after a predetermined period of time that user 1 has been logged in on CD 1 (e.g. after 1 hour), upon disconnection of CD 1 from the network, or upon user 1 initiating the synchronization. A person skilled in the art would recognize other events that could necessitate and/or trigger synchronization, all of which are within the scope of the present invention.

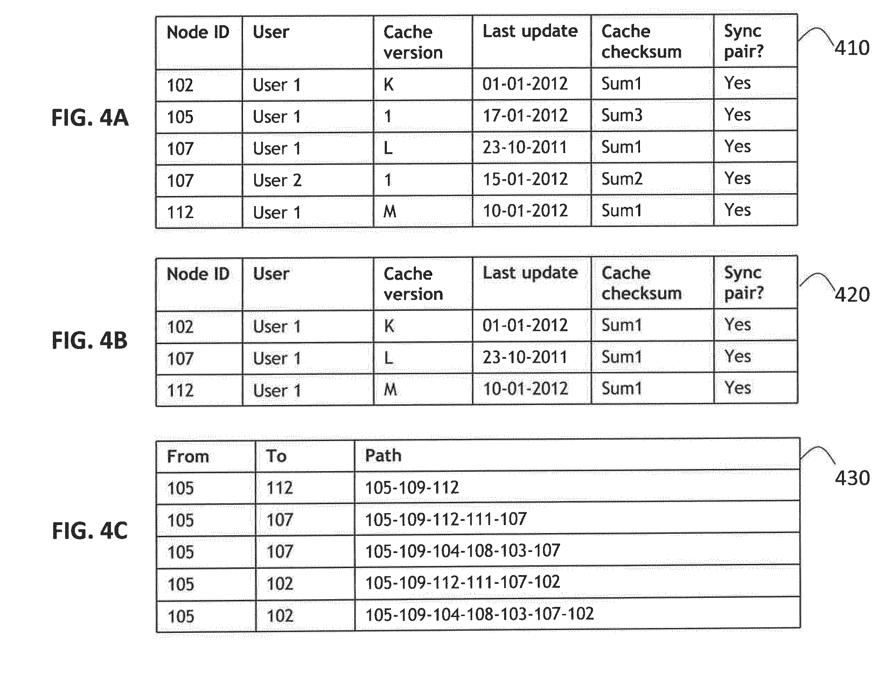

If, before step 206, the node that CD 1 is connected to does not already have a cache for user 1 for CD 1, then the node first creates such a cache and then the data of user 1 on CD 1 is copied into the newly created cache for this device for user 1 in the node. If the node that CD 1 is connected to already has a cache for user 1 for CD 1, then data for user 1 on CD 1 is synchronized with the data in that cache on the node. For the illustrative example described herein and shown in Figs.4A-5B, it is assumed that before CD 1 connected to node 105, node 105 did not have a cache for user 1 for CD 1. Therefore, as a part of step 206, node 105 creates a new cache for user 1 for CD 1.

The method then continues with the step 207 of Fig.2B. As can be seen from Fig.2B, steps 207-214 are related to the self-organizing synchronization between various nodes in the network 300 and could be performed iteratively until all nodes that need to be synchronized are synchronized. In line with the iterative nature of steps 207-214, a node that has most recently been synchronized is referred to in Fig.2B as "node X" and the node that is synchronized next is referred to as "node X+1." Further, in the present description, references are sometimes made identifying which round of synchronization is being described when discussing steps 207-214. Thus, following step 206 of Fig. 2A, steps 207-214 are performed in the first round of synchronization, where the nearest node that has been synchronized with the CD 1 (i.e., node 105) is the node X.

In the following description of each of the steps of Fig. 2B, first a step is described in general terms with references to "node X" and/or "node X+1" and then that step is described for a particular synchronization round.

In step 207, node X contacts the CDB 120 and, in step 208, updates the CDB 120 with the information regarding the update in data stored in node X in the cache for user 1 for CD 1. In the first round of synchronization, that means that the nearest node, node 105, updates the CDB 120 regarding the information stored in the new cache that node 105 created when CD 1 was synchronizing its data for user 1 with node 105.

Fig.4A provides an exemplary illustration of CDB entries 410 for CD 1 illustrated in Fig. 3 after the CDB 120 has been updated to reflect synchronization of CD 1 with node 105 in step 208 of Fig. 2B carried out in the first round of synchronization. The entries 410 illustrate that two users have used CD 1 in the past: user 1 and user 2. The entries 410 also illustrate that, in the past, both user 1 and user 2 have logged in on CD 1 when CD 1 was connected to the same node, node 107. The fact that three of the nodes in Fig. 4A, namely nodes 102, 107 and 112, having caches for user 1 are shown to have the same cache checksum, Sum1, is intended to illustrate that these nodes are synchronized with one another. The cache stored in node 107 for user 2 is storing different data, as is illustrated in Fig. 4A with a different cache checksum, Sum2. The cache storing the latest data for user 1 of CD 1 is the cache in node 105 which, as shown in Fig. 4A, was last updated (in this example, created) on 17-01-2012. The cache for user 1 in node 105 stores data different from that stored in the corresponding caches in nodes 102, 107, and 112, as illustrated in Fig. 4A with yet another different cache checksum, Sum3. The entries 410 further illustrate version of caches stored in the CDB 120, where K, L, and M are used to represent integers indicating cache versions.

Upon contacting the CDB 120, in step 209 (which could also be performed before step 208), node X requests from the CDB 120 information regarding other nodes that are storing information for CD 1 for user 1. Continuing with the example above, in response to the request of step 209, in the first round of synchronization, node 105 receives from the CDB 120 at least information regarding caches for user 1 in nodes 102, 107, and 112, as illustrated with entries 420 in Fig. 4B. Of course the CDB 120 could provide the same information in a different manner. For example, the CDB 120 could provide node 105 with all of the entries that the CDB 120 has regarding CD 1, such as e.g. the entries 410 illustrated in Fig. 4A. Any manner of providing the information by the CDB 120 in response to step 209 is appropriate and within the scope of the present invention, as long as node X is then in the possession of identifying which nodes node X needs to synchronize with.

The method then proceeds to step 210, where, based on the information received from the CDB 120 in response to the request provided in step 209, node X identifies which of the nodes storing caches for the user 1 for CD 1 are the sync pair nodes. As previously described herein, "sync pair nodes" refer to nodes to which the user 1 has connected before, the term "sync pair" indicating that whenever data in a cache of a particular user of a particular client device is changed in one of the nodes, corresponding caches of the other sync pair nodes need to be synchronized.

In an optional embodiment, in order to avoid unnecessary synchronization of nodes to which a user does not connect any longer, a node could be considered to be one of the sync pair nodes if the user has connected to it within the predetermined limited time period before the current time.

In one embodiment, node X could be configured to identify the sync pair nodes based on one-bit flags or similar indications stored in the CDB 120 as associated with each of the caches (shown in the last columns of the entries 410 and 420). For each cache, such a flag could indicate either that the cache is stored in a node that is one of the sync pair nodes (e.g. when the flag is set) or that the cache is stored in a node that is not a sync pair node. Other indications that would enable node X to identify sync pair nodes could easily be envisioned by a person skilled in the art and are within the scope of the present invention.

For the illustrative purposes, it is assumed that nodes 102, 107, and 112 are sync pair nodes because CD 1 has connected to them before. Node 105 is also a sync pair node since this is the node to which CD 1 has connected the most recently. This is illustrated in Fig. 3 with nodes 102, 105, 107, and 112 having a bold outline and different shading than the rest of the nodes in the network 300.

The method then proceeds to step 211, where node X determines whether synchronization with any of the identified sync pair nodes is needed.

In one embodiment, step 211 could be implemented by node X determining whether the data stored for user 1 in the cache of node X is the same as the data stored for user 1 in the caches of the sync pair nodes. This could be done by e.g. comparing the checksums of the data stored in the respective caches. In the first round of synchronization, node 105 would then determine that sync pair nodes 102, 107, and 112 still need to be synchronized with node 105 because the checksum of data for user 1 for the client device 320 in node 105 is Sum3, while the checksum of data in corresponding caches in nodes 102, 107, and 112 is Sum1.

In an alternative embodiment, step 211 could be implemented by node X determining by analyzing the timestamps associated with the last update of the cache for user 1 for CD 1 in each of the sync pair nodes and in node X. If the timestamps of the cache in node X indicates update time that is later than the time indicated by the timestamp in one of the sync pair nodes by a predetermined amount, then node X determines that that sync pair node needs to be synchronized. Other ways of making the determination in step 211 can be envisioned and are within the scope of the present invention.

When, in step 211, node X determines that no synchronization is needed because all of the sync pair nodes have successfully been synchronized, the method ends. Otherwise, the method proceeds to step 212.

In step 212, a path evaluator (PE) in node X, such as the PE 124 illustrated for node 101 in Fig. 1, is configured to determine the next node to be synchronized, node X+1. To that end, PE within node X has access to a map that indicates data connections between various nodes of the network 300. In one embodiment, such a map could be stored in the CDB 120 to which PE of each node in the network 300 could refer to. In another embodiment, each node in the network 300 could store such a map, as long as the map stored in the nodes is timely updated to reflect changes in data connections in the network 300.

Note that, according to the embodiments of the present invention, node X can only initiate synchronization its data with a node with which node X has a data connection with. Consequently, if node X determines that synchronization is needed with a node with which node X does not have a data connection with, then one or more intermediate nodes will be involved in the synchronization as well.

In one embodiment, PE within node X may be configured to only identify a first node within each of data paths between node X and each one of the sync pair nodes that need to be synchronized, those first nodes being nodes with which node X has a data connection with. In another embodiment, PE within node X can identify the entire data paths between node X and each of the sync pair nodes that need to be synchronized, which data paths may include zero or more intermediate nodes.

For example, in the first round of synchronization, PE in node 105 may identify the paths from node 105 to the sync pair nodes as shown in Fig. 4C, after which PE in node 105 will determine that the next node to be synchronized with is node 109, for synchronization with all of the sync pair nodes.

Note that there may be alternative data paths from node X to sync pair nodes, as e.g. shown in Fig. 4C with two alternative paths between node 105 and node 102 as well as two alternative paths between node 105 and 102. In an embodiment, PE within node X may be configured to select one of the alternative paths based on some predetermined criteria. In one implementation, PE may be configured to simply select the shortest data path. In alternative implementations, PE within node X may be configured to select a path with the best data connection, a path that includes the most of the sync pair nodes, or a path that includes node or nodes having the most storage available. A person skilled in the art can envision a combination of these exemplary selection criteria as well as various other possibilities for selecting the most appropriate path, all of which are within the scope of the present invention. In the present discussion, it is assumed that PE in each node X is configured to select the shortest path to the sync pair node.

The method then continues to step 213, where node X connects to one of the next nodes X+1 identified in step 212 and synchronizes data stored in the cache for user 1 for CD 1 of node X with data stored for user 1 for CD 1 in node X+1. Similar to step 206 described above, during the synchronization now initiated by node X, if node X+1 already has a cache for user 1 for CD 1, then the data in that cache of node X+1 is synchronized with the data in the corresponding cache in node X. Otherwise, in response to an attempt for synchronization fro node X, node X+1 creates a cache for user 1 for CD 1 and all of the data from the corresponding cache of node X is copied to the newly created cache in node X+1.

In the first round of synchronization, since in step 212 node 105 identified only node 109 as the next node to be synchronized, node 105 synchronized its cache for user 1 for CD 1 with node 109. Since, as seen from e.g. entries 410 of Fig. 4A, node 109 does not have a cache for user 1 for CD 1, node 109 creates one in response to a synchronization attempt from node 105, after which node 105 copies all of the data in its cache for user 1 for CD 1 to the newly created corresponding cache in node 109.

The method then proceeds to step 214, where node X+1 that was synchronized with in step 213 becomes the new node X and the method proceeds to step 207 described above for the new node X. In step 214 of the first round of synchronization, node 109 becomes the new node X and the method then proceeds to the second round of synchronization starting with step 207.

While in the illustrative example described above it happened so that, in step 212, only a single node was identified as node X+1 that is next to be synchronized, with other configurations of data connections, it could happen that there are several next nodes X+1 that node X needs to synchronize with. In such a case, steps 213 and 214 (and, consequently, steps 207-214 in the next iteration) are performed for each one of the next nodes X+1. In this manner, the synchronization would spread out through the network 300 until all the sync pair nodes are synchronized.

Steps 207-214 are now briefly described for the second round of synchronization for the scenario illustrated in Fig. 3 where node X is now node 109.

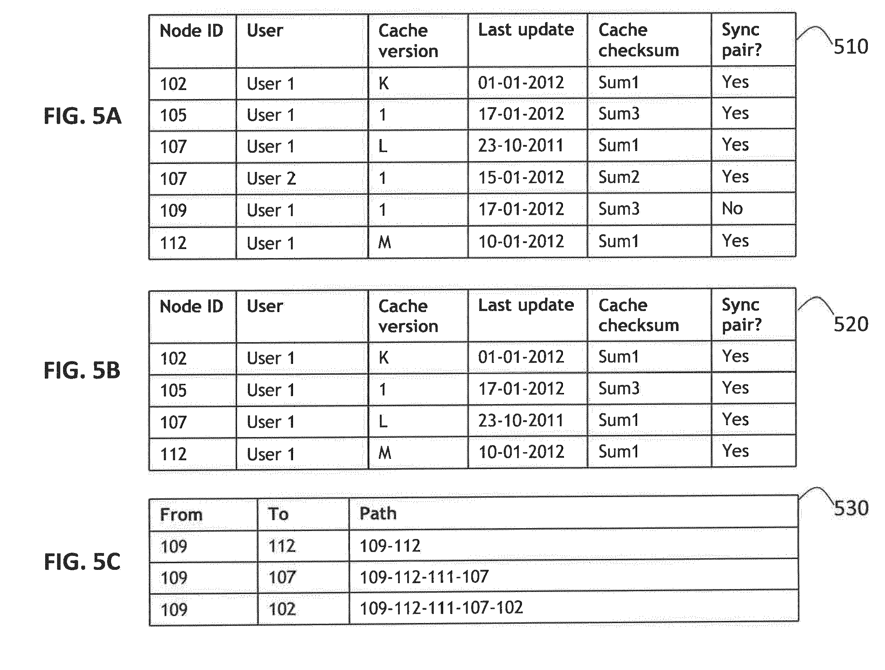

In step 207, node 109 contacts the CDB 120 and, in step 208, updates the CDB 120 with the information regarding the information stored in the new cache that node 109 created when node 105 was synchronizing its data for user 1 for CD 1 with node 109. Fig.5A provides an exemplary illustration of CDB entries 510 stored in the CDB 120 for CD 1 illustrated in Fig. 3 after the CDB 120 has been updated, in step 208 of Fig. 2B carried out in the second round of synchronization, to reflect synchronization of node 105 with node 109 in step 213 of Fig. 2B carried out in the first round of synchronization.

The entries 510 differ from the entries 410 illustrated in Fig.4A for the previous round of synchronization in that the entries 510 also include an entry for node 109 storing the newly created cache for user 1 of CD 1. As shown in Fig. 4A, the entry for node 109 was last updated (in this example, created) on 17-01-2012 and stores the same data as the corresponding cache in node 105, Sum3.

Upon contacting the CDB 120, in step 209, node 109 requests from the CDB 120 information regarding other nodes that are storing information for CD 1 for user 1. In response to that request node 109 receives from the CDB 120 at least information regarding caches for user 1 in nodes 102, 105, 107, and 112, as illustrated with entries 520 in Fig. 5B.

The method then proceeds to step 210, where, based on the information received from the CDB 120 in response to the request provided in step 209, node 109 identifies which of the nodes storing caches for the user 1 for CD 1 are the sync pair nodes. As is seen from the last column in Fig. 5B, all of the nodes 102, 105, 107, and 112 are sync pair nodes and will be identified as such by node 109.

The method then proceeds to step 211, where node 109 determines whether synchronization with any of the identified sync pair nodes is needed. Since the data stored in the cache for user 1 for CD 1 in node 109 is represented by a checksum value of Sum3 is the same as the data in the corresponding cache of node 105 and different from the data in the corresponding caches of nodes 102, 107, and 112, node 109 will determine that only synchronization with nodes 102, 107, and 112 is necessary, but not with node 105.

The method will then proceed to step 212 where PE in node 109 will identify node 112 as the next node to be synchronized. To that end, PE in node 109 may first identify the paths from node 109 to the sync pair nodes as shown in Fig. 5C, that will enable PE in node 109 to determine that the next node to be synchronized with is node 112, for synchronization with all of the sync pair nodes.

The method then continues to step 213, where node 109 connects to node 112 and synchronizes data stored in the cache for user 1 for CD 1 of node 109 with data stored for user 1 for CD 1 in node 112. Now, since node 112 already had a cache for user 1 of CD 1, as seen from e.g. entries 510 of Fig. 5A, node 109 synchronizes its data in a cache for user 1 for CD 1 with that existing cache in node 112.

The method then proceeds to step 214, where node 112 becomes the new node X and the method then proceeds to the third round of synchronization starting with step 207.

Note that, as a result of synchronization between nodes 109 and 112 in step 213 of the second round of synchronization, data stored for user 1 for CD 1 in caches in both node 105 and 109 will, in general, change. The data now stored in those caches will become a combination of data with a checksum Sum1 previously stored in the cache of node 112 and data with a checksum Sum3 previously stored in the cache of node 109. Therefore, it is worthwhile now to briefly describe steps 207-214 for the third round of synchronization for the scenario illustrated in Fig.3 in order to observe how that affects the self-organization.

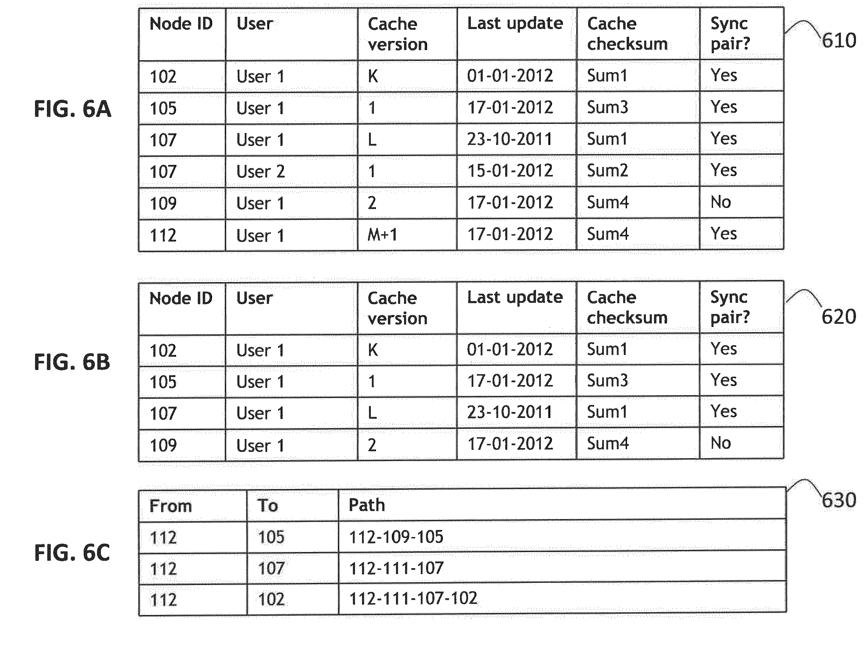

After step 214 of the second round of synchronization, node 112 becomes the new node X and the method proceeds to the third round of synchronization starting again with step 207. In step 207 of this round, node 112 contacts the CDB 120 and, in step 208, updates the CDB 120 with the information regarding the data for user 1 for CD 1 stored in the cache of node 112, which cache was updated when node 109 was synchronizing its data for user 1 for CD 1 with node 112. Fig.6A provides an exemplary illustration of CDB entries 610 stored in the CDB 120 for CD 1 illustrated in Fig. 3 after the CDB 120 has been updated. As shown in Fig. 6A, the entry regarding the cache in node 112 now indicates that this is the next cache version, M+1, that was updated on 17-01-2012, and that checksum of the data in the cache is Sum4. As also shown in Fig. 6A, the entry regarding the cache in node 109 now indicates that this is the next cache version, 2, that was updated on 17-01-2012, and that checksum of the data in the cache is Sum4. The data in these updated caches in nodes 109 and 112 is a result of merging of data in the former cache in node 112 having a checksum Sum1 and data in the former cache in node 109 having a checksum Sum3. Note also that in Figs. 6A and 6B, as well is in Fig. 5A, node 109 is correctly indicated to be a node that is not a sync pair node.

Upon contacting the CDB 120, in step 209, node 112 requests from the CDB 120 information regarding other nodes that are storing information for CD 1 for user 1. In response to that request node 112 receives from the CDB 120 at least information regarding caches for user 1 in nodes 102, 105, 107, and 109, as illustrated with entries 620 in Fig.6B.

The method then proceeds to step 210, where, based on the information received from the CDB 120 in response to the request provided in step 209, node 112 identifies which of the nodes storing caches for the user 1 for CD 1 are the sync pair nodes. As is seen from the last column in Fig. 6B, only nodes 102, 105, and 107 are sync pair nodes and will be identified as such by node 112, while node 109 is not a sync pair node but an intermediate node.

The method then proceeds to step 211, where node 112 determines whether synchronization with any of the identified sync pair nodes is needed. Since the data stored in the cache for user 1 for CD 1 in node 112 is represented by a checksum value of Sum4 is different from the data in the corresponding caches of nodes 102, 105, and 107, node 112 will determine that synchronization with all of the identified sync pair nodes is necessary.

The method will then proceed to step 212 where PE in node 112 may first identify the paths from node 112 to the sync pair nodes as shown in Fig. 6C. PE in node 112 will then identify node 111 as the next node to be synchronized on the data path to sync pair nodes 107 and 102. PE in node 112 will also identify node 109 as the next node to be synchronized on the data path to sync pair node 105 because the cache in node 105 contains different data for user 1 for CD 1 than the cache in node 112. Since now two nodes are identified as the next to be synchronized, after this step the synchronization will go in two directions - one direction to the next node being node 111 and another direction to the next node being node 109. Thus, the method steps 213 and 214, as well as further method steps in possible further rounds of synchronization will now be performed for each of nodes 111 and 109.

The method then continues to step 213, where node 112 connects to node 111 and synchronizes data stored in the cache for user 1 for CD 1 of node 112 with node 111. Since there was previously no cache in node 111 for user 1 for CD 1, one will be created and data from the corresponding cache of node 112 will be copied there.

The method then proceeds to step 214, where node 111 becomes the new node X and the method then proceeds to the fourth round of synchronization starting with step 207.

From step 212 described above for the third round of synchronization, the method also continues to step 213, where node 112 connects to node 109 and synchronizes data stored in the cache for user 1 for CD 1 of node 112 with data stored for user 1 for CD 1 in node 109. Now, since node 109 already had a cache for user 1 of CD 1, as seen from e.g. entries 610 of Fig. 6A, node 112 synchronizes its data in a cache for user 1 for CD 1 with that existing cache in node 109, but it does not change the data because the data in the caches of nodes 109 and 112 is the same, Sum4.

The method then proceeds to step 214, where node 109 also becomes the new node X and the method then proceeds to the fourth round of synchronization starting with step 207.

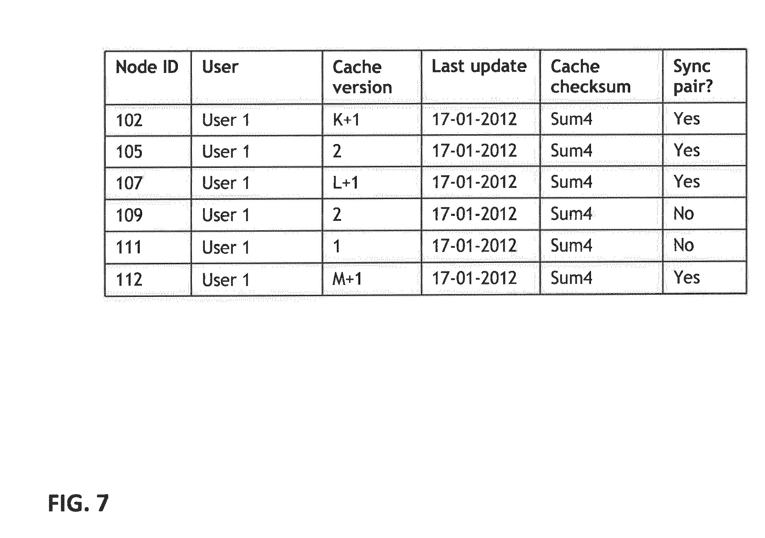

Since the above description makes clear how steps 207-214 are implemented, these steps are not described for further rounds of synchronization. At the end of this synchronization process, all of the sync pair nodes will be synchronized to contain a cache for user 1 of CD 1 with the same data, Sum4. This is illustrated in Fig. 7 showing entries 700 for user 1 of CD 1 as would be stored in the CDB 120 after all rounds of synchronization are over.

While method steps 207-214 of Fig.2B were described above as steps that continue from step 206 of Fig.2A, steps of Fig.2B could also be performed in isolation from the embodiment of Fig.2A and in combination with other embodiments. Namely, each of the nodes 101-115 could be configured to initiate synchronization process of Fig.2B once the node detects that some data in that node has changed for any reason, not only for the reason specified in Fig.2A. For example, as described above, as a result of synchronization between nodes 109 and 112 in step 213 of the second round of synchronization, data stored for user 1 for CD 1 in a cache in node 109 will change to the merged data Sum4. Since data in node 109 has changed, node 109 may then be configured to initiate process of Fig.2B for synchronizing its changed data for user 1 for CD 1 with sync pair nodes. Alternatively, data in a cache for a particular user for a particular client device in one of nodes 101-115 may change because e.g. an administrator that may have a direct access to the cache changed settings for that user for that client device stored in that cache. Since the node will then detect a change in the content of one of its caches, the node will then be able to initiate the synchronization process of Fig.2B which will result in the synchronization of corresponding caches in all sync pair nodes.

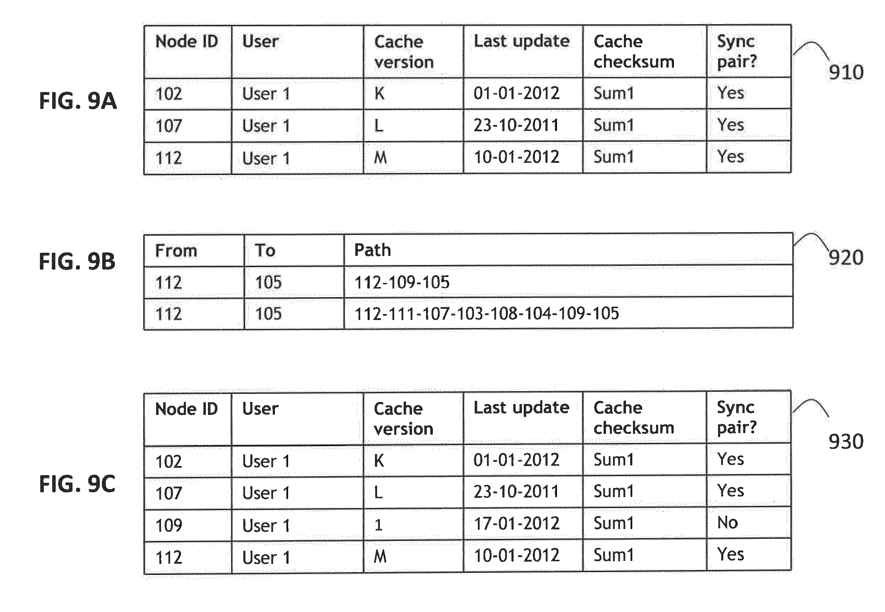

Similarly, while method steps 201-206 of Fig.2A were described above as steps that precede step 207 of Fig.2B, steps of Fig.2A could also be performed in isolation from the embodiment of Fig.2B and in combination with other embodiments. For example, from step 205 of Fig.2A the method could proceed with steps described in Figs.9A-9C, described below.

In various embodiments, further optional modifications could be made to the methods and systems described above. For example, at least some of the nodes 101-115, but preferably all of the nodes, could include a garbage collector such as the collector 128 illustrated in Fig.1 for node 101. The garbage collector in a particular node could perform a check and delete certain caches in that node. For example, the garbage collector could be configured to delete caches that have not been used, accessed, and/or synchronized for a long time, or to delete caches for a particular user if the client devices of that user has not been connected to the node (as the nearest node) in some limited predetermined time period. A person skilled in the art could envision other manners for the garbage collector to clean up caches in the node according to a set of other predefined rules, all of which are within the scope of the present invention. In the preferred embodiment, the garbage collector in each node would be configured to access the CDB 120 and obtain information regarding caches in other nodes corresponding to the caches in the node of the garbage collector. Such garbage collector could then use that information to e.g. make sure that if the garbage collector plans to delete a cache for a particular user for a particular client device, the same cache would still be available in some other node in the network (e.g. in the node that is more often connected to by the user). In this manner, at least one cache for each user for each client device would always remain in some node in the network.

In an embodiment, the network 300 could further include a backup node for providing backup storage of all users' caches from the nodes of the network 300. Such a backup node would have an active data path with one instance of every user cache. In such an embodiment, the existence of the backup node storing a particular user cache would be reflected in the CDB, where the entry in the CDB 120 would indicate the backup node as a sync pair node. Therefore, in step 210 of Fig.2B, node X would identify the backup node as a sync pair node and then proceed to perform the necessary steps for initiating synchronization of its data with the corresponding cache in the backup node, in the same manner as node X would do for any other sync pair node. For example, continuing with the illustrative example provided above, the backup node could have an active data path with the cache of user 1 for CD 1 stored in node 112, as shown in Fig. 3 with a backup node 330 connected to the node 112. In such an embodiment, once node 112 has been synchronized to include the latest data for user 1 for CD 1 and has become node X repeating steps 207-214 in the third round of synchronization, then node 112 will initiate synchronization with the backup node 330 as a part of step 213, described above.

Yet another optional modification that could be made to the methods and systems described above deals with a situation where a new client device, e.g. a new portable computer, is being used for the first time by a user that already has a cache in one or more nodes in the network 100. It would then be desirable to be able to provide the user of this new device with the information stored for the user in one of the caches stored in the network 100.

Such a situation may e.g. arise when, in step 205 of Fig.2A described above it is determined that CD 1 is not known to the CDB 120. In this case, the method of Fig.2A would proceed to step 801 of Fig.8A, where Fig.8A, in turn, continues with the steps of either Fig.8B or Fig.8C.

Fig.8A provides a flow diagram of method steps for synchronizing data from a node in the network of Fig.3 storing data for the user of a new client device with the node that the new client device is connected to, according to one embodiment of the present invention. Fig.8B provides a flow diagram of method steps for synchronizing data from the new client device with the node that the client device is connected to when neither the client device nor the user of the client device have previously been known to the CDB 120, according to one embodiment of the present invention. Fig.8C provides a flow diagram of method steps for synchronizing data from the new client device of Fig.3 with the node that the client device is connected to after data stored for the user has been provided to the new client device, according to one embodiment of the present invention. Similar to the method steps of Figs.2A-2B, the method steps of Figs.8A-8C are described in conjunction with an exemplary architecture of the self-organizing network 300 illustrated in Fig.3. However, while the method steps of Figs.8A-8C may be described in conjunction with Fig.3, persons skilled in the art will recognize that any system configured to perform the method steps, in any order, is within the scope of the present invention.

Returning back to step 205 of Fig.2A, if, in that step, it is determined that CD 1 is not known to the CDB 120 (i.e., there are no entries in the CDB 120 for this particular client device), then the method proceeds to step 801 of Fig.8A where a determination is made as to whether user 1 of CD 1 is known to the CDB 120. In an embodiment, the determination can be made by nearest node NN, i.e. the node that CD 1 is connected to (in Fig.3 node NN being node 105), contacting the CDB 120 to obtain information based on which a determination can be made as to whether user 1 is known to the CDB 120, i.e. as to whether the CDB 120 contains any entries for that user. In response to obtaining such information, it can be either node NN (i.e, node 105 in this case) that can make that determination and provide its outcome to CDB 1 or CD 1 could make the determination itself, e.g. based on the information obtained by node NN and provided to CD 1. In another embodiment, the determination can be made by node NN contacting the CDB 120 to obtain an answer from the CDB 120 as to whether or not user 1 is known to the CDB 120 (i.e., it is the CDB 120 that makes the determination then and provides the answer to CD 1).

If, in step 801, it is determined that user 1 is also not known to the CDB 120, then it means that both a client device and a user using the device are new and the method proceeds to Fig.8B, where, in step 812, user 1 uses CD 1 and, in step 813, CD 1 initiates synchronization of its data with node NN that CD 1 is connected to. This synchronization is similar to the synchronization performed in step 206 described above in Fig.2A and, therefore, in the interests of brevity, is not described in details here. The method of Fig.8B may then proceed with step 207 of Fig.2B, described above.

If, in step 801, it is determined that user 1 is already known to the CDB 120, then the method proceeds to step 801 where node NN obtains from the CDB 120 information (entries) related to user 1. Continuing with the example described above and illustrated in Fig.4A, except for the case that CD 1 is now not known to the CDB 120, in step 802 node NN could obtain entries 910 as shown in Fig.9A. The entries 910 include entries stored in the CDB 120 for the sync pair nodes for user 1 using one or more client devices other than CD 1.

The method then proceeds to step 803, where, based on the information obtained in step 802, PE in node NN, such as the PE 124 illustrated for node 101 in Fig. 1, is configured to identify the node that is nearest to node NN and which contains the latest update for data of user 1 (the identified node referred to herein as "node Y"). To that end, PE in node NN may use the map indicating data connections between the nodes in the network 300, described above in association with step 212 of Fig.2B.

In this example, since all of the sync pair nodes contain the same information, in step 803 PE in node NN would identify node 112 as the one being nearest to node NN (node 105) and containing the latest update for data of user 1.

The method then proceeds to step 804, where node NN provides an indication to node Y identified in step 803 that node Y needs to synchronize its data for user 1 with node NN. In a preferred embodiment, the indication is provided in such a manner that it appears to node Y that synchronization is needed with node NN in a way similar that it appears to node Y that synchronization is needed with sync pair nodes as a part of step 211, described above. The indication may either be provided from node NN to node Y via one or more intermediate nodes or via the CDB 120.

Once node Y received an indication that node Y needs to synchronize its data for user 1 with node NN, in step 805 PE in node Y is configured to determine the next node to be synchronized, node Y+1. To that end, PE within node Y has access to the map that indicates data connections between various nodes of the network 300, the map described above in association with step 212 of Fig.2B.

Since node Y can only initiate synchronization its data with a node with which node Y has a data connection with, if there is no data connection between node Y and node NN, then one or more intermediate nodes will be involved in the synchronization as well.

Similar to step 212 performed by node X described above, in one embodiment of step 805 PE within node X may be configured to only identify a first node a data path between node Y and node NN, the first node being a node with which node Y has a data connection with. In another embodiment of step 805, PE within node Y can identify the entire data path between node Y and node NN, which data path may include zero or more intermediate nodes. In a situation where PE in node Y would identify alternative data paths from node Y to node NN, PE in node Y could select one of the data paths based e.g. on considerations discussed above in association with step 212 of Fig.2B.

Continuing with the example above, as a part of step 805, PE in node 112 (i.e., the node Y in this case) may identify the path from node 112 to node 105 as shown in Fig. 9B, after which PE in node 112 will determine that the next node to be synchronized with is node 109, for synchronization with node NN (node 105).

The method then continues to step 806, where, similar to step 213 of Fig.2B, node Y connects to the next node Y+1 identified in step 805 and synchronizes data stored in the cache for user 1 of node Y with data stored for user 1 in node Y+1. Similar to step 206 described above, during the synchronization now initiated by node Y, if node Y+1 already has a cache for user 1, then the data in that cache of node Y+1 is synchronized with the data in the corresponding cache in node Y. Otherwise, in response to an attempt for synchronization from node Y, node Y+1 creates a cache for user 1 and all of the data from the corresponding cache of node Y is copied to the newly created cache in node Y+1.

In the exemplary embodiment of Fig.3, when node 112 is node Y and the identified next node to be synchronized is node 109, then, as a part of step 806, a new cache will be created in node 109 comprising a copy of data from the corresponding cache in node 112. Optionally, the CDB 120 entries could be updated to reflect that synchronization (similar to step 208 described above), so that, after synchronization between node 112 and node 109, entries for user 1 in the CDB 120 would look as shown with entries 930 in Fig.9C.

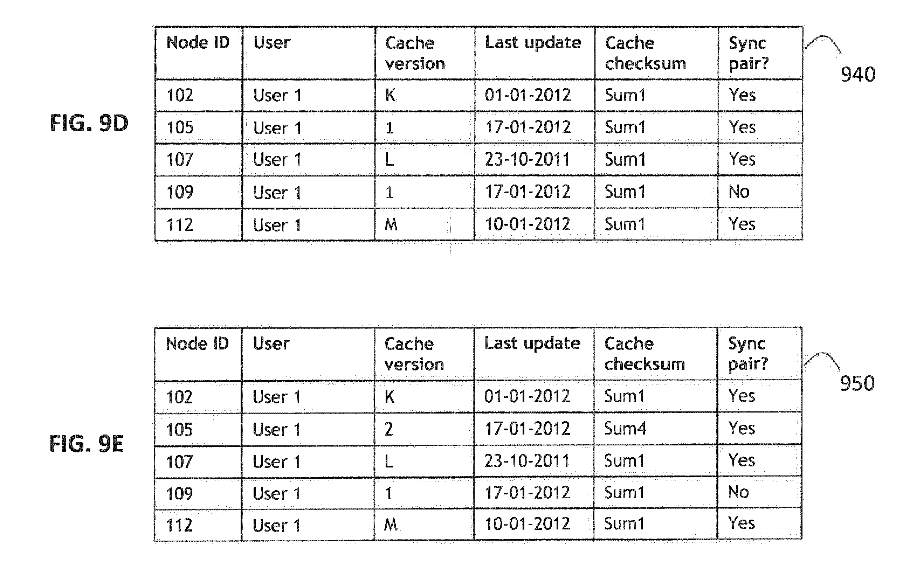

The method then proceeds to step 807 where node Y+1 determines whether it is the node that CD 1 is connected to, node NN. If this is not the case, then further synchronization is needed in order to provide data for user 1 to node NN. In this case, node Y+1 becomes node Y and the method continues to step 805 again, which begins second round of synchronization of Fig.8A. Continuing with the example above, in this round, in step 805 node 109, which has now become node Y, would determine that the next node to be synchronized with is node 105. In step 806, node 109 would synchronize its data for user 1 with node 105, creating a new cache for user 1 in node 105. As a result, entries in the CDB 120 for user 1 could look as shown with entries 940 in Fig.9D. In step 807, node 105 would determine that it is the node that CD 1 is connected to. The method would then continue to step 809 shown in Fig.8C.

In step 809, node NN to which CD 1 is connected to, is configured to provide data in its newly created cache for user 1 to CD 1. In this manner, data stored for user 1 in the network 300 is made available to the user of a new client device CD 1. The user may then continue to work on CD 1 (in step 810), possibly changing data stored for the user on CD 1 and, similar to step 206 described above, in step 811 CD 1 may initiate synchronization of data for user 1 on CD 1 with the nearest node, i.e., node NN (105). When the CDB 120 is updated to reflect this synchronization, entries for user 1 for CD 1 could look as entries 950 shown in Fig.9E, illustrating that the cache in node 105 has been updated with new data of user 1 from CD 1. The method may then proceed as described in Fig.2B in order to synchronize this change in data of a sync pair node 105 with all other sync pair nodes.

While method steps 801-808 of Fig.8A were described above as method that continues from step 205 of Fig.2A, steps of Fig.8A could also be performed in isolation from the embodiment of Fig.2A and in combination with other embodiments. Namely, each of the nodes 101-115 could be configured to initiate the process of Fig.8A for obtaining data for user 1 stored in some other node in the network once the node detects that it needs to have data for user 1 for any reason, not only because a new client device connected to it. In such a case, node NN referred to in Fig.8A would simply be node that needs to have data for user 1 and it does not have to be the nearest node to any client device.

Similarly, while method steps 801-808 of Fig.8A were described above as steps followed by either steps of Fig.8B or steps of Fig.8C, steps of Fig.8A could also be performed in isolation from the embodiments of Figs.8B and 8C and/or in combination with other embodiments. For example, the method of Fig. 8A could end once, in step 807, it is determined that node Y+1 is the node NN that needs the information for user 1.

### SCENARIO # 2: CACHES FOR PARTICULAR USERS, IRRESPECTIVE OF CLIENT DEVICES

Even though persons skilled in the art would have no difficulties applying the descriptions above to a scenario where data stored on the nodes 101-115 is organized in individual caches for different users regardless of the particular client devices that the users have used, the method steps of Figs. 2A and 2B are now briefly repeated for such a case.

With respect to Fig. 2A, the description provided above remains substantially the same, except that steps 204 and 205 do not need to be performed any longer since, in this embodiment, the CDB does not distinguish between the different client devices. Consequently, method steps of Figs. 8A-8C that would follow from step 205 of Fig. 2A are not applicable for this scenario either.

If, before step 206, the node that CD 1 is connected to does not already have a cache for user 1, then the node first creates such a cache and then the data of user 1 on CD 1 is copied into the newly created cache for this user in the node. If the node that CD 1 is connected to already has a cache for user 1, then data for user 1 on CD 1 is synchronized with the data in that cache on the node.

The method then proceeds to step 207, where node X contacts the CDB 120 and, in step 208, updates the CDB 120 with the information regarding the update in data stored in node X in the cache for user 1. In the first round of synchronization, that means that the nearest node, node 105, updates the CDB 120 regarding the information stored in the new cache that node 105 created when CD 1 was synchronizing its data for user 1 with node 105.

Upon contacting the CDB 120, in step 209 (which could also be performed before step 208), node X requests from the CDB 120 information regarding other nodes that are storing information for user 1. As described above, any manner of providing the information by the CDB 120 in response to step 209 is appropriate and within the scope of the present invention, as long as node X is then in the possession of identifying which other nodes node X needs to synchronize with.

The method then proceeds to step 210, where, based on the information received from the CDB 120 in response to the request provided in step 209, node X identifies which of the nodes storing caches for the user 1 are the sync pair nodes, in one of the manners similar to the ones described in scenario # 1.

The method then proceeds to step 211, where node X determines whether synchronization with any of the identified sync pair nodes is needed, also in one of the manners similar to the ones described in scenario # 1.

When, in step 211, node X determines that no synchronization is needed because all of the sync pair nodes have successfully been synchronized, the method ends. Otherwise, the method proceeds to step 212.

In step 212, a path evaluator (PE) in node X, such as the PE 124 illustrated for node 101 in Fig. 1, is configured to determine the next node to be synchronized, node X+1, in one of the manners similar to the ones described in scenario # 1.

The method then continues to step 213, where node X connects to one of the next nodes X+1 identified in step 212 and synchronizes data stored in the cache for user 1 of node X with data stored for user 1 in node X+1. Similar to step 206 described above, during the synchronization now initiated by node X, if node X+1 already has a cache for user 1, then the data in that cache of node X+1 is synchronized with the data in the corresponding cache in node X. Otherwise, in response to an attempt for synchronization fro node X, node X+1 creates a cache for user 1 and all of the data from the corresponding cache of node X is copied to the newly created cache in node X+1.

The method then proceeds to step 214, where node X+1 that was synchronized with in step 213 becomes the new node X and the method proceeds to step 207 described above for the new node X. Steps 207-214 are then repeated for the next round of synchronization.

It is to be understood that any feature described in relation to any one embodiment may be used alone, or in combination with other features described, and may also be used in combination with one or more features of any other of the embodiments, or any combination of any other of the embodiments.

While exemplary embodiments presented herein were described as using checksum algorithm for determining whether cache has been changed, in other embodiments, different algorithms may be used for such determination, such as e.g. hashing algorithms. Further, the synchronization described herein refers not only to file level synchronization where synchronization is applied to individual files, but also to block level synchronization where synchronization includes applying deltas.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. A method for a first node of a plurality of nodes to assist data synchronization between at least some of the plurality of nodes, the method comprising:
the first node detecting a change in data stored in a cache of the first node for a particular user;
in response to the change:
the first node identifying at least one further node of the plurality of nodes that stores a corresponding cache comprising data for the particular user and requires synchronization between the data stored in the cache of the first node and the data stored in the corresponding cache of the at least one further node,
the first node identifying a next node to be synchronized with as a node that is first in a data path from the first node to the at least one further node, the data path comprising zero or more intermediate nodes, and
the first node synchronizing the data stored in the cache of the first node with data stored in a cache of the next node to be synchronized with.

2. The method according to claim 1, wherein the change in the data stored in the cache of the first node results from synchronization of data for the particular user stored in a cache of a preceding node of the plurality of nodes with the data stored in the cache of the first node.

3. The method according to claim 1, wherein the change in the data stored in the cache of the first node results from synchronization of data for the particular user stored on a client device of the particular user with the data stored in the cache of the first node.

4. The method according to claims 1 or 2, wherein the change in the data stored in the cache of the first node comprises either creation, in the first node, of the cache for storing data for the particular user or change of the data for the particular user stored in the existing cache in the first node.

5. The method according to any one of the preceding claims, further comprising deleting the cache of the first node for the particular user when a predetermined condition is satisfied.

6. The method according to claim 5, wherein the predetermined condition comprises a condition that a client device with the particular user logged in thereon has not connected to the first node for a predetermined amount of time.

7. The method according to any one of the preceding claims, further comprising the step of providing information to a central database indicative of at least one of the change in the data stored in the cache of the first node for the particular user and the synchronization of the data stored in the cache of the first node with the data stored in the cache of the next node to be synchronized with.

8. The method according to claim 7, wherein the identification of the at least one further node of the plurality of nodes is done based on information, stored in the central database, regarding one or more nodes of the plurality of nodes that store corresponding caches comprising data for the particular user.

9. The method according to any one of the preceding claims, wherein the identification of the next node to be synchronized with is done based on a map indicative of data connections between different nodes of the plurality of nodes.

10. A computer program comprising software code portion configured, when executed by a processor, for performing the steps of at least one of claims 1-9.

11. A node comprising means for performing the steps of at least one of the claims 1-9.

12. A network comprising a plurality of nodes, each node comprising means for performing the steps of at least one of the claims 1-9.
